# EUROPEAN PATENT APPLICATION

(11) **EP 4 847 178 A1**
(43) Date of publication of application: **02.12.2026**
(21) Application number: 24920448.8
(22) Date of filing: 24.01.2024
(51) Int. Cl.: B23C 5/28

(54) **ROTARY CUTTING TOOL**

(71) Applicant: Sumitomo Electric Hardmetal Corp., Itami-shi, Hyogo 664-0016 (JP)
(72) Inventor: KAWABATA, Yusuke, Itami-shi, Hyogo 664-0016 (JP)
(74) Representative: Boult Wade Tennant LLP
(86) International application number: PCT/JP2024/001992
(87) International publication number: WO 2025/158561

(57) **Abstract**

There is provided a rotary cutting tool that has a large diameter and that can supply a coolant from inside of a main body portion.

A rotary cutting tool (100) is rotatable about a rotation axis and has a main body portion (1) and a cover (2) attached to the main body portion. The main body portion is provided with a fitting portion (16) into which a coolant is introduced and which is attached to a holding tool, a coolant accumulation groove (15) located on an outer side with respect to the fitting portion in a radial direction, a first attachment hole (11) into which a bolt (41) that fixes the main body portion to the holding tool is inserted, and a coolant hole (14) which is contiguous to the coolant accumulation groove and from which the coolant is discharged.

## Description

### TECHNICAL FIELD

The present disclosure relates to a rotary cutting tool.

### BACKGROUND ART

Japanese Patent Laying-Open No. 2021-94680 (PTL 1) discloses an attachment member for a slotting cutter with a coolant hole. Japanese National Patent Publication No. 2010-516483 (PTL 2) discloses a milling assembly in which a coolant is supplied from a coolant supply source to a mill.

### CITATION LIST

### PATENT LITERATURE

PTL 1: Japanese Patent Laying-Open No. 2021-94680
PTL 2: Japanese National Patent Publication No. 2010-516483

### SUMMARY OF INVENTION

### TECHNICAL PROBLEM

It is an object of the present disclosure to provide a rotary cutting tool that has a large diameter and that can supply a coolant from inside of a main body portion.

### SOLUTION TO PROBLEM

A rotary cutting tool according to the present disclosure is rotatable about a rotation axis and includes a main body portion and a cover attached to the main body portion. The main body portion is provided with a fitting portion into which a coolant is introduced and which is attached to a holding tool, a coolant accumulation groove located on an outer side with respect to the fitting portion in a radial direction, a first attachment hole into which a bolt that fixes the main body portion to the holding tool is inserted, and a coolant hole which is contiguous to the coolant accumulation groove and from which the coolant is discharged. The cover is provided with a recess for sending the coolant into the coolant accumulation groove. D1 satisfies a formula 1, D1 and D2 satisfy a formula 2, and R and D2 satisfy a formula 3 when D1 is defined as a maximum diameter of the main body portion, D2 is defined as an outer diameter of the coolant accumulation groove, and R is defined as a distance between the rotation axis and a center of the first attachment hole in the radial direction with a unit of each of D1, D2, and R being mm.
[Math. 1] $150 mm \leq D 1 \leq 700 mm$ (Formula 1)
[Math. 2] $D 1 - 125 mm \leq D 2 \leq D 1 - 60 mm$ (Formula 2)
[Math. 3] $R \leq 0.5 \times D 2 - 20 mm$ (Formula 3)

### ADVANTAGEOUS EFFECTS OF INVENTION

According to the present disclosure, it is possible to provide a rotary cutting tool that has a large diameter and that can supply a coolant from inside of a main body portion.

### BRIEF DESCRIPTION OF DRAWINGS

Fig. 1 is a first schematic perspective view showing a configuration of a rotary cutting tool according to the present embodiment.
Fig. 2 is an exploded schematic perspective view showing the configuration of the rotary cutting tool according to the present embodiment.
Fig. 3 is a second schematic perspective view showing the configuration of the rotary cutting tool according to the present embodiment.
Fig. 4 is a schematic plan view showing a configuration of a main body portion.
Fig. 5 is a schematic plan view showing a configuration of a cover.
Fig. 6 is a schematic perspective plan view showing a state in which the cover is attached to the main body portion.
Fig. 7 is a first schematic cross sectional view showing a state in which a holding tool is attached to the rotary cutting tool.
Fig. 8 is a second schematic cross sectional view showing a state in which the holding tool is attached to the rotary cutting tool.
Fig. 9 is a schematic perspective view showing a state in which a workpiece is processed using a rotary cutting tool.

### DETAILED DESCRIPTION

### [Description of Embodiments]

First, embodiments of the present disclosure (also referred to as the present embodiment) will be listed and described.
(1) A rotary cutting tool according to the present disclosure is rotatable about a rotation axis and includes a main body portion and a cover attached to the main body portion. The main body portion is provided with a fitting portion into which a coolant is introduced and which is attached to a holding tool, a coolant accumulation groove located on an outer side with respect to the fitting portion in a radial direction, a first attachment hole into which a bolt that fixes the main body portion to the holding tool is inserted, and a coolant hole which is contiguous to the coolant accumulation groove and from which the coolant is discharged. The cover is provided with a recess for sending the coolant into the coolant accumulation groove. D1 satisfies a formula 1, D1 and D2 satisfy a formula 2, and R and D2 satisfy a formula 3 when D1 is defined as a maximum diameter of the main body portion, D2 is defined as an outer diameter of the coolant accumulation groove, and R is defined as a distance between the rotation axis and a center of the first attachment hole in the radial direction with a unit of each of D1, D2, and R being mm. Thus, it is possible to provide a rotary cutting tool that has a large diameter and that can supply a coolant from inside of a main body portion.
(2) In the rotary cutting tool according to (1), D3 satisfies a formula 4 and D3 and L satisfy a formula 5 when D3 is defined as an inner diameter of the coolant hole and L is defined as a length of the coolant hole as viewed along the rotation axis with a unit of each of D3 and L being mm. Thus, it is possible to reduce breakage and damage of a long drill when forming a coolant hole in the rotary cutting tool using the long drill.
   [Math. 4] $1 mm \leq D 3 \leq 3 mm$ (Formula 4)
   [Math. 5] $10 \leq L / D 3 \leq 30$ (Formula 5)
(3) In the rotary cutting tool according to (1) or (2), the recess may have a cross shape as viewed along the rotation axis. Thus, the coolant can be equally sent toward the coolant accumulation groove. Further, the recess can be formed in the cover so as not to overlap with the first attachment hole into which a bolt is inserted.
(4) In the rotary cutting tool according to any one of (1) to (3), the cover may be provided with a second attachment hole into which a screw that fixes the cover to the main body portion is inserted. The second attachment hole may be located on an inner side with respect to the coolant accumulation groove in the radial direction. Thus, even when pressure of the coolant is high, it is possible to reduce leakage of the coolant from a clearance between the main body portion and the cover. Therefore, the coolant can be effectively supplied to the cutting insert during cutting. As a result, the life of the cutting insert can be prolonged.
(5) In the rotary cutting tool according to any one of (1) to (4), the cover may be provided with a third attachment hole into which a screw that fixes the cover to the main body portion is inserted. The third attachment hole may be located on the outer side with respect to the coolant accumulation groove in the radial direction. Thus, even when pressure of the coolant is high, it is possible to reduce leakage of the coolant from a clearance between the main body portion and the cover. Therefore, the coolant can be effectively supplied to the cutting insert during cutting. As a result, the life of the cutting insert can be prolonged.

Specific examples of the rotary cutting tool according to the embodiment of the present disclosure will be described below with reference to figures. In the below-described figures, the same or corresponding portions are denoted by the same reference characters and will not be described repeatedly.

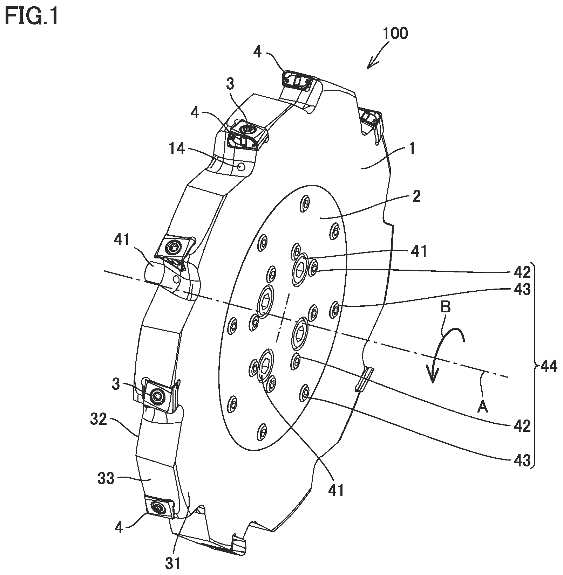

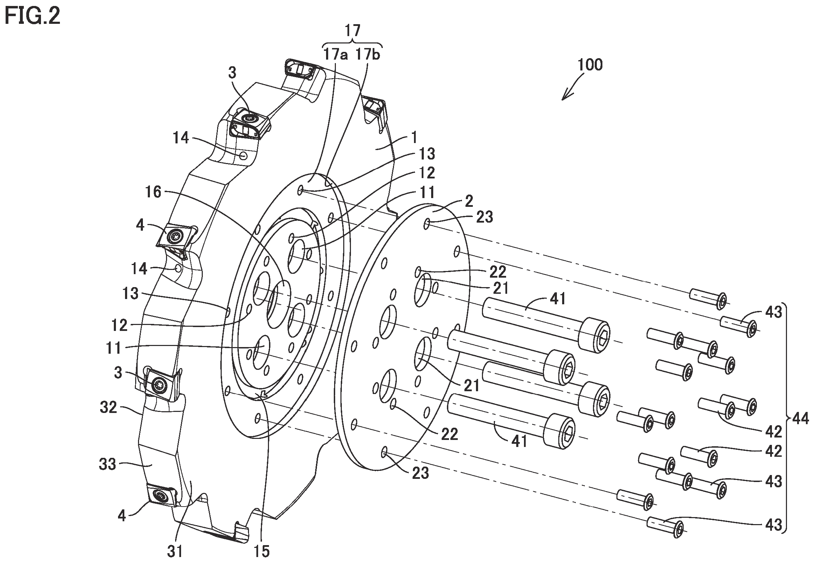

Fig. 1 is a first schematic perspective view showing a configuration of a rotary cutting tool 100 according to the present embodiment. Fig. 2 is an exploded schematic perspective view showing the configuration of rotary cutting tool 100 according to the present embodiment.

As shown in Figs. 1 and 2, rotary cutting tool 100 according to the present embodiment is a side cutter rotatable about a rotation axis A. Rotary cutting tool 100 mainly has a main body portion 1, a cover 2, bolts 41, a cover set screw 44, cutting inserts 4, and insert fastening portions 3. Main body portion 1 has a first side surface 31, a second side surface 32, and an outer peripheral surface 33. Second side surface 32 is located opposite to first side surface 31. Outer peripheral surface 33 is contiguous to each of first side surface 31 and second side surface 32. Outer peripheral surface 33 surrounds rotation axis A. Cutting inserts 4 are disposed on outer peripheral surface 33.

As shown in Fig. 2, main body portion 1 is provided with a fitting portion 16, first attachment holes 11, fifth attachment holes 12, and sixth attachment holes 13. Fitting portion 16 is a portion to be attached to a holding tool 7 described later. Fitting portion 16 is, for example, a spigot portion. Fitting portion 16 extends along rotation axis A. Fitting portion 16 is a through hole. Fitting portion 16 is opened in each of first side surface 31 and second side surface 32.

A cover disposition groove 17 is provided in first side surface 31. Cover disposition groove 17 is constituted of a bottom surface 17a and an inner peripheral surface 17b. Inner peripheral surface 17b is contiguous to bottom surface 17a. Each of fitting portion 16, first attachment holes 11, fifth attachment holes 12, and sixth attachment holes 13 is opened in bottom surface 17a. First attachment hole 11 is a through hole. First attachment hole 11 is opened in second side surface 32. Each of fifth attachment hole 12 and sixth attachment hole 13 is a hole having a bottom.

Cover 2 is attached to main body portion 1. Cover 2 is disposed in cover disposition groove 17. Cover 2 is provided with second attachment holes 22, third attachment holes 23, and fourth attachment holes 21. Each of second attachment holes 22, third attachment holes 23, and fourth attachment holes 21 is a through hole.

First attachment holes 11 are positioned to correspond to fourth attachment holes 21. Bolt 41 extends through each of first attachment holes 11 and fourth attachment holes 21. Cover set screw 44 has inner disposition screws 42 and outer disposition screws 43. Second attachment holes 22 are positioned to correspond to fifth attachment holes 12. Each of inner disposition screws 42 extends through second attachment hole 22 and reaches fifth attachment hole 12. Inner disposition screw 42 is fastened to main body portion 1 in fifth attachment hole 12.

Third attachment holes 23 are positioned to correspond to sixth attachment holes 13. Each of outer disposition screws 43 extends through third attachment hole 23 and reaches sixth attachment hole 13. Outer disposition screw 43 is fastened to main body portion 1 in sixth attachment hole 13. Each of inner disposition screw 42 and outer disposition screw 43 fixes cover 2 to main body portion 1.

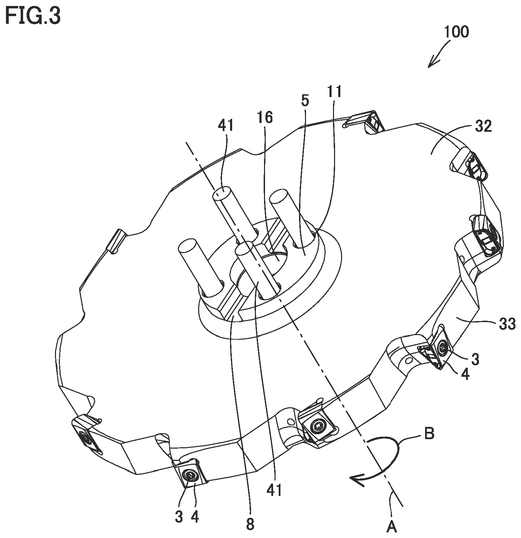

Fig. 3 is a second schematic perspective view showing the configuration of rotary cutting tool 100 according to the present embodiment. As shown in Fig. 3, a protrusion 5 is provided at second side surface 32 of main body portion 1. First attachment hole 11 is opened in protrusion 5. Protrusion 5 is provided with a groove portion 8 extending in a radial direction. The radial direction is a direction extending radially from rotation axis A. Fitting portion 16 is opened in protrusion 5. Groove portion 8 is contiguous to fitting portion 16.

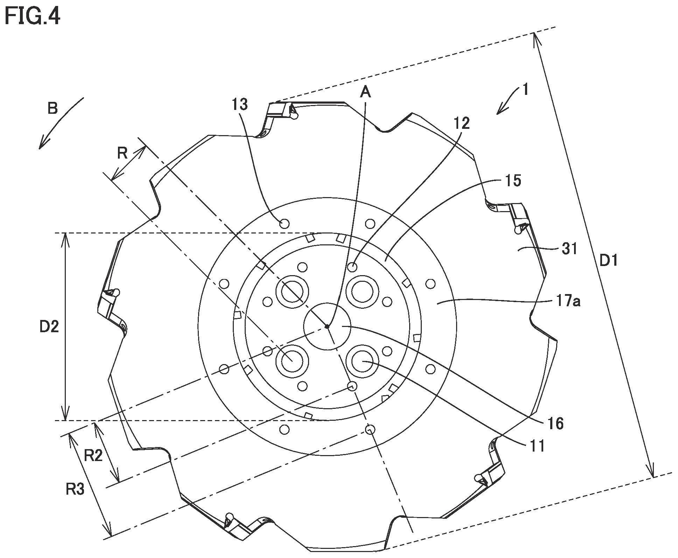

Fig. 4 is a schematic plan view showing the configuration of main body portion 1. As shown in Fig. 4, a coolant accumulation groove 15 is provided in main body portion 1. Coolant accumulation groove 15 is provided in bottom surface 17a. Coolant accumulation groove 15 is located on the outer side with respect to fitting portion 16 in the radial direction. Coolant accumulation groove 15 has, for example, an annular shape as viewed along rotation axis A. Coolant accumulation groove 15 surrounds rotation axis A. Coolant accumulation groove 15 is not limited to the annular shape. Coolant accumulation groove 15 may have, for example, an arc shape.

Bottom surface 17a is provided with first attachment holes 11, fifth attachment holes 12, and sixth attachment holes 13. The number of first attachment holes 11 is, for example, four. As viewed along rotation axis A, first attachment holes 11 are disposed at equal intervals along a rotation direction B of rotary cutting tool 100. Each of the number of fifth attachment holes 12 and the number of sixth attachment holes 13 is, for example, eight. As viewed along rotation axis A, fifth attachment holes 12 are disposed at equal intervals along rotation direction B of rotary cutting tool 100 and sixth attachment holes 13 are disposed at equal intervals along rotation direction B of rotary cutting tool 100.

Each of fifth attachment holes 12 is located on the outer side with respect to fitting portion 16 in the radial direction. Each of fifth attachment holes 12 is located on the inner side with respect to coolant accumulation groove 15 in the radial direction. The center of fifth attachment hole 12 is located on the outer side with respect to the center of first attachment hole 11 in the radial direction.

Each of sixth attachment holes 13 is located on the outer side with respect to fitting portion 16 in the radial direction. Each of sixth attachment holes 13 is located on the outer side with respect to coolant accumulation groove 15 in the radial direction. The center of sixth attachment hole 13 is located on the outer side with respect to the center of first attachment hole 11 in the radial direction.

As shown in Fig. 4, D1 is defined as the maximum diameter of main body portion 1. D2 is defined as the outer diameter of coolant accumulation groove 15. R is defined as a distance between rotation axis A and the center of first attachment hole 11 in the radial direction. The unit of each of D1, D2, and R is mm. D1 satisfies a formula 1. D1 and D2 satisfy a formula 2. R and D2 satisfy a formula 3.
[Math. 6] $150 mm \leq D 1 \leq 700 mm$ (Formula 1)
[Math. 7] $D 1 - 125 mm \leq D 2 \leq D 1 - 60 mm$ (Formula 2)
[Math. 8] $R \leq 0.5 \times D 2 - 20 mm$ (Formula 3)

D1 may be 200 mm or more, may be 250 mm or more, or may be 300 mm or more. D1 may be 650 mm or less, may be 600 mm or less, or may be 550 mm or less.

D2 may be 0.2 times or more as large as D1 or may be 0.3 times or more as large as D1. D2 may be 0.8 times or less as large as D1 or may be 0.6 times or less as large as D1. R is larger than the radius of fitting portion 16. R is smaller than the half of the inner diameter of coolant accumulation groove 15.

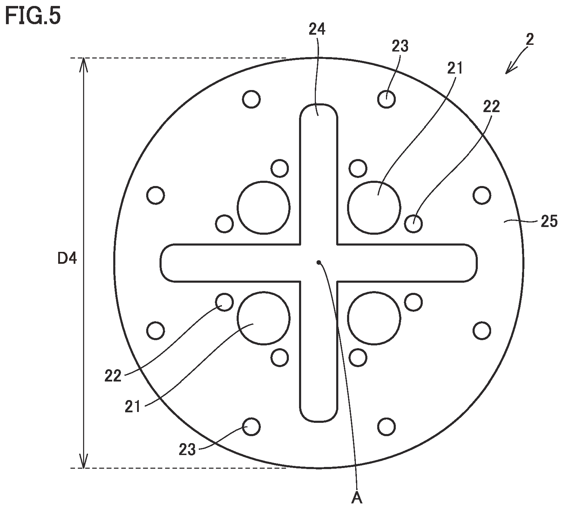

Fig. 5 is a schematic plan view showing the configuration of cover 2. As shown in Fig. 5, cover 2 has a facing surface 25 facing main body portion 1. D4 is defined as the diameter of cover 2. D4 is smaller than D1 and is larger than D2. Cover 2 is provided with a recess 24. Recess 24 is opened in facing surface 25. Recess 24 is not opened in the surface opposite to facing surface 25. In other words, recess 24 is a hole having a bottom.

As shown in Fig. 5, recess 24 has, for example, a cross shape as viewed along rotation axis A. Recess 24 intersects rotation axis A. Recess 24 extends from rotation axis A in the radial direction. The center of recess 24 having such a cross shape is located on rotation axis A. Recess 24 is a flow path for sending the coolant to coolant accumulation groove 15. The shape of recess 24 is not limited to the cross shape. Recess 24 may have a straight line shape, for example.

As shown in Fig. 5, facing surface 25 is provided with second attachment holes 22, third attachment holes 23, and fourth attachment holes 21. Each of the number of second attachment holes 22 and the number of third attachment holes 23 is, for example, eight. As viewed along rotation axis A, second attachment holes 22 are disposed at equal intervals along a rotation direction B of rotary cutting tool 100 and third attachment holes 23 are disposed at equal intervals along rotation direction B of rotary cutting tool 100. The number of fourth attachment holes 21 is, for example, four. As viewed along rotation axis A, fourth attachment holes 21 are disposed at equal intervals along rotation direction B of rotary cutting tool 100.

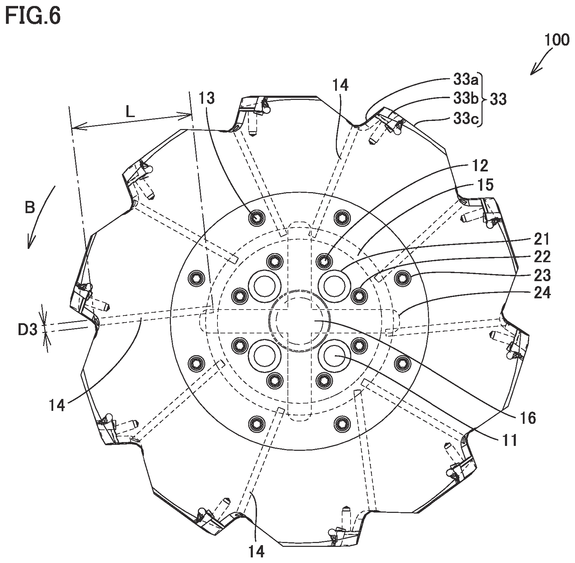

Fig. 6 is a schematic perspective plan view showing a state in which cover 2 is attached to main body portion 1. Each of second attachment holes 22 and fourth attachment holes 21 is located on the inner side with respect to coolant accumulation groove 15 in the radial direction. Each of third attachment holes 23 is located on the outer side with respect to coolant accumulation groove 15 in the radial direction.

As shown in Fig. 6, as viewed along rotation axis A, recess 24 overlaps with each of fitting portion 16 and coolant accumulation groove 15. First attachment holes 11, second attachment holes 22, and third attachment holes 23 overlap with fourth attachment holes 21, fifth attachment holes 12, and sixth attachment holes 13, respectively. Each of first attachment holes 11, second attachment holes 22, third attachment holes 23, fourth attachment holes 21, fifth attachment holes 12, and sixth attachment holes 13 does not overlap with recess 24.

Coolant holes 14 are provided in main body portion 1. Each of coolant holes 14 is opened in outer peripheral surface 33 of main body portion 1. Coolant hole 14 is contiguous to coolant accumulation groove 15. Coolant hole 14 extends from coolant accumulation groove 15 to outer peripheral surface 33. The coolant is discharged to outside through coolant hole 14. The number of coolant holes 14 is, for example, 10. As viewed along rotation axis A, the openings of coolant holes 14 in outer peripheral surface 33 may be provided at equal intervals in rotation direction B.

Outer peripheral surface 33 is provided with outer peripheral grooves 33a, insert disposition grooves 33b, and outermost peripheral surface portions 33c. Each of outer peripheral grooves 33a is located on the inner side with respect to outermost peripheral surface portion 33c in the radial direction. Coolant hole 14 is opened in the bottom of outer peripheral groove 33a. Cutting insert 4 is disposed in insert disposition groove 33b. Cutting insert 4 is attached to outer peripheral surface 33 of main body portion 1 using insert fastening portion 3.

D3 is defined as the inner diameter of coolant hole 14. L is defined as the length of coolant hole 14 as viewed in the direction along rotation axis A. The unit of each of D3 and L is mm. D3 satisfies a formula 4. D3 and L satisfy a formula 5. It should be noted that the length of coolant hole 14 is the maximum length of the inner wall of coolant hole 14.
[Math. 9] $1 mm \leq D 3 \leq 3 mm$ (Formula 4)
[Math. 10] $10 \leq L / D 3 \leq 30$ (Formula 5)

D3 may be 1.2 mm or more or may be 1.4 mm or more. D3 may be 2.8 mm or less or may be 2.6 mm or less. L/D3 may be 12 or more or may be 14 or more. L/D3 may be 28 or less or may be 26 or less.

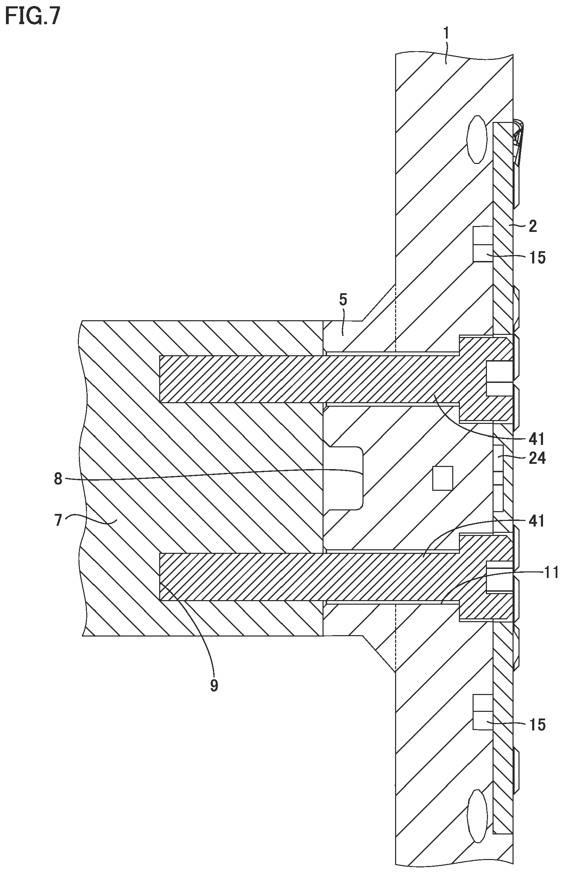

Fig. 7 is a first schematic cross sectional view showing a state in which a holding tool 7 is attached to rotary cutting tool 100. The first cross section is a plane parallel to rotation axis A and intersecting two bolts 41 without including rotation axis A.

As shown in Fig. 7, holding tool 7 is provided with bolt insertion holes 9. In each of bolt insertion holes 9, bolt 41 is fastened to holding tool 7. Bolt 41 fixes main body portion 1 to holding tool 7. Bolt 41 is inserted into first attachment hole 11. Bolt 41 extends through first attachment hole 11 and reaches bolt insertion hole 9.

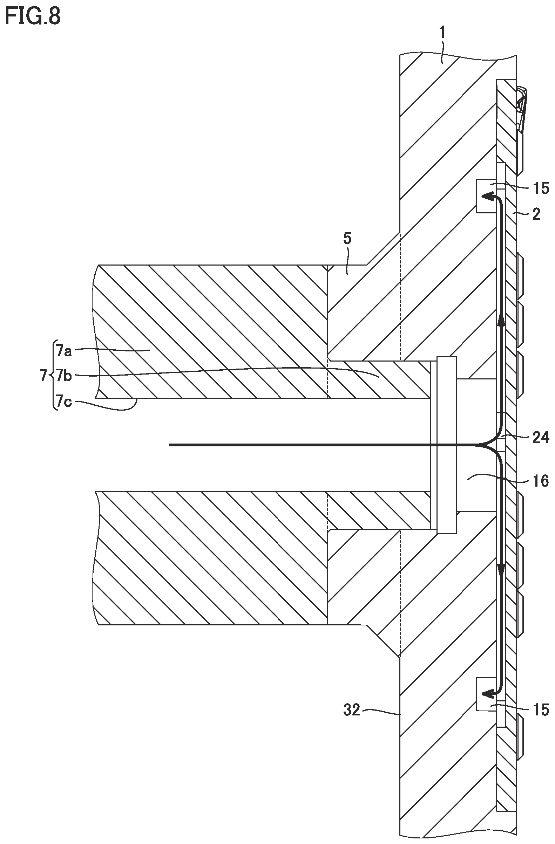

Fig. 8 is a second schematic cross sectional view showing a state in which holding tool 7 is attached to rotary cutting tool 100. The second cross section is a plane parallel to rotation axis A and including rotation axis A.

As shown in Fig. 8, holding tool 7 has a first region 7a and a second region 7b. Second region 7b is contiguous to first region 7a. The outer diameter of first region 7a is larger than the outer diameter of second region 7b. Second region 7b protrudes from the end surface of first region 7a. Second region 7b is inserted into fitting portion 16. The front end surface of first region 7a may be in contact with protrusion 5. The outer peripheral surface of second region 7b may be in contact with the inner peripheral surface of protrusion 5. Holding tool 7 is provided with a coolant introduction hole 7c. Coolant introduction hole 7c extends through each of first region 7a and second region 7b.

Arrows shown in Fig. 8 represent flow of the coolant. The coolant is introduced into coolant introduction hole 7c provided in holding tool 7. The coolant is introduced from holding tool 7 into fitting portion 16 of main body portion 1. The coolant passes through fitting portion 16, and then flows toward recess 24 provided in cover 2. The coolant flows through recess 24 toward coolant accumulation groove 15. The coolant flows through coolant accumulation groove 15 toward coolant hole 14. The coolant is discharged to the outside of main body portion 1 through coolant hole 14.

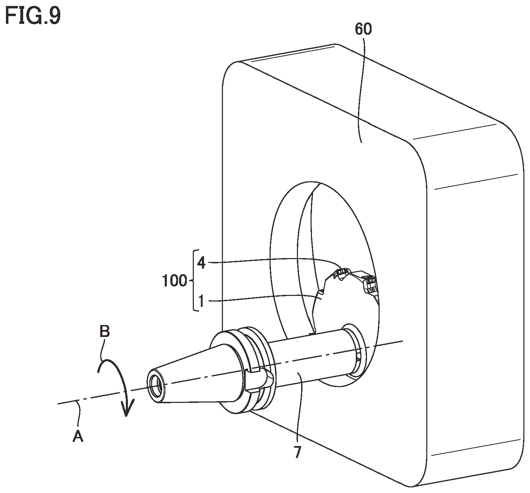

Fig. 9 is a schematic perspective view showing a state in which a workpiece is processed using rotary cutting tool 100.

As shown in Fig. 9, rotary cutting tool 100 is attached to holding tool 7. Holding tool 7 is, for example, an arbor. The plurality of cutting inserts 4 are attached to outer peripheral surface 33 of main body portion 1 of rotary cutting tool 100. Rotation of holding tool 7 causes rotation of rotary cutting tool 100 about rotation axis A. Rotary cutting tool 100 is movable along a plane perpendicular to rotation axis A while being rotated about rotation axis A. A workpiece 60 is cut by cutting inserts 4. During the cutting, the coolant is discharged toward cutting inserts 4 from coolant holes 14 provided in main body portion 1.

Next, functions and effects of rotary cutting tool 100 according to the present embodiment will be described.

In rotary cutting tool 100 according to the present embodiment, D1 satisfies formula 1, D1 and D2 satisfy formula 2, and R and D2 satisfy formula 3 when D1 is defined as the maximum diameter of main body portion 1, D2 is defined as the outer diameter of coolant accumulation groove 15 and R is defined as the distance between rotation axis A and the center of first attachment hole 11 in the radial direction with the unit of each of D1, D2, and R being mm. Thus, it is possible to provide rotary cutting tool 100 that has a large diameter and that can supply the coolant from the inside of main body portion 1. Specifically, when D2 and R satisfy formula 3, coolant accumulation groove 15 can be formed on the outer side with respect to first attachment hole 11. Further, when D1 satisfies formula 1 and D1 and D2 satisfy formula 2, coolant hole 14 can be formed in main body portion 1 without breakage and damage of a long drill when forming coolant hole 14 in main body portion 1 using the long drill.

In rotary cutting tool 100 according to the present embodiment, D3 may satisfy formula 4, and D3 and L may satisfy formula 5 when D3 is defined as the inner diameter of coolant hole 14 and L is defined as the length of coolant hole 14 as viewed along rotation axis A with the unit of each of D3 and L being mm. Thus, it is possible to reduce breakage and damage of a long drill when forming coolant hole 14 in rotary cutting tool 100 using the long drill.

In rotary cutting tool 100 according to the present embodiment, recess 24 may have a cross shape as viewed along rotation axis A. Thus, the coolant can be equally sent toward coolant accumulation groove 15. Further, recess 24 can be formed in cover 2 so as not to overlap with first attachment hole 11 into which bolt 41 is inserted.

In rotary cutting tool 100 according to the present embodiment, second attachment hole 22 may be located on the inner side with respect to coolant accumulation groove 15 in the radial direction. Thus, even when pressure of the coolant is high (for example, 7 MPa or more and 10 MPa or less), it is possible to reduce leakage of the coolant from a clearance between main body portion 1 and cover 2. Therefore, the coolant can be effectively supplied to cutting insert 4 during cutting. As a result, the life of cutting insert 4 can be prolonged.

In rotary cutting tool 100 according to the present embodiment, third attachment hole 23 may be located on the outer side with respect to coolant accumulation groove 15 in the radial direction. Thus, even when pressure of the coolant is high (for example, 7 MPa or more and 10 MPa or less), it is possible to reduce leakage of the coolant from a clearance between main body portion 1 and cover 2. Therefore, the coolant can be effectively supplied to cutting insert 4 during cutting. As a result, the life of cutting insert 4 can be prolonged.

The embodiments disclosed herein are illustrative and non-restrictive in any respect. The scope of the present invention is defined by the terms of the claims, rather than the embodiments described above, and is intended to include any modifications within the scope and meaning equivalent to the terms of the claims.

### REFERENCE SIGNS LIST

1: main body portion; 2: cover; 3: insert fastening portion; 4: cutting insert; 5: protrusion; 7: holding tool; 7a: first region; 7b: second region; 7c: coolant introduction hole; 8: groove portion; 9: bolt insertion hole; 11: first attachment hole; 12: fifth attachment hole; 13: sixth attachment hole; 14: coolant hole; 15: coolant accumulation groove; 16: fitting portion; 17: cover disposition groove; 17a: bottom surface; 17b: inner peripheral surface; 21: fourth attachment hole; 22: second attachment hole; 23: third attachment hole; 24: recess; 25: facing surface; 31: first side surface; 32: second side surface; 33: outer peripheral surface; 33a: outer peripheral groove; 33b: insert disposition groove; 33c: outermost peripheral surface portion; 41: bolt; 42: inner disposition screw; 43: outer disposition screw; 44: cover set screw; 60: workpiece; 100: rotary cutting tool; A: rotation axis; B: rotation direction.

## Claims

1. A rotary cutting tool rotatable about a rotation axis, the rotary cutting tool comprising:
a main body portion; and
a cover attached to the main body portion, wherein
the main body portion is provided with a fitting portion into which a coolant is introduced and which is attached to a holding tool, a coolant accumulation groove located on an outer side with respect to the fitting portion in a radial direction, a first attachment hole into which a bolt that fixes the main body portion to the holding tool is inserted, and a coolant hole which is contiguous to the coolant accumulation groove and from which the coolant is discharged,
the cover is provided with a recess for sending the coolant into the coolant accumulation groove, and
D1 satisfies a formula 1, D1 and D2 satisfy a formula 2, and R and D2 satisfy a formula 3 when D1 is defined as a maximum diameter of the main body portion, D2 is defined as an outer diameter of the coolant accumulation groove, and R is defined as a distance between the rotation axis and a center of the first attachment hole in the radial direction with a unit of each of D1, D2, and R being mm.
[Math. 1] $150 mm \leq D 1 \leq 700 mm$ (Formula 1) [Math. 2] $D 1 - 125 mm \leq D 2 \leq D 1 - 60 mm$ (Formula 2) [Math. 3] $R \leq 0.5 \times D 2 - 20 mm$ (Formula 3)

2. The rotary cutting tool according to claim 1, wherein D3 satisfies a formula 4 and D3 and L satisfy a formula 5 when D3 is defined as an inner diameter of the coolant hole and L is defined as a length of the coolant hole as viewed along the rotation axis with a unit of each of D3 and L being mm.
[Math. 4] $1 mm \leq D 3 \leq 3 mm$ (Formula 4) [Math. 5] $10 \leq L / D 3 \leq 30$ (Formula 5)

3. The rotary cutting tool according to claim 1 or 2, wherein the recess has a cross shape as viewed along the rotation axis.

4. The rotary cutting tool according to any one of claims 1 to 3, wherein
the cover is provided with a second attachment hole into which a screw that fixes the cover to the main body portion is inserted, and
the second attachment hole is located on an inner side with respect to the coolant accumulation groove in the radial direction.

5. The rotary cutting tool according to any one of claims 1 to 4, wherein
the cover is provided with a third attachment hole into which a screw that fixes the cover to the main body portion is inserted, and
the third attachment hole is located on the outer side with respect to the coolant accumulation groove in the radial direction.

## Amended claims

### Amended claims under Art. 19.1 PCT

1. A rotary cutting tool rotatable about a rotation axis, the rotary cutting tool comprising:
a main body portion; and
a cover attached to the main body portion, wherein
the main body portion is provided with a fitting portion into which a coolant is introduced and which is attached to a holding tool, a coolant accumulation groove located on an outer side with respect to the fitting portion in a radial direction, a first attachment hole into which a bolt that fixes the main body portion to the holding tool is inserted, and a coolant hole which is contiguous to the coolant accumulation groove and from which the coolant is discharged,
the cover is provided with a recess for sending the coolant into the coolant accumulation groove, and
D1 satisfies a formula 1, D1 and D2 satisfy a formula 2, and R and D2 satisfy a formula 3 when D1 is defined as a maximum diameter of the main body portion, D2 is defined as an outer diameter of the coolant accumulation groove, and R is defined as a distance between the rotation axis and a center of the first attachment hole in the radial direction with a unit of each of D1, D2, and R being mm.
[Math. 1] $150 mm \leq D 1 \leq 700 mm$ (Formula 1) [Math. 2] $D 1 - 125 mm \leq D 2 \leq D 1 - 60 mm$ (Formula 2) [Math. 3] $R \leq 0.5 \times D 2 - 20 mm$ (Formula 3)

2. The rotary cutting tool according to claim 1, wherein D3 satisfies a formula 4 and D3 and L satisfy a formula 5 when D3 is defined as an inner diameter of the coolant hole and L is defined as a length of the coolant hole as viewed along the rotation axis with a unit of each of D3 and L being mm.
[Math. 4] $1 mm \leq D 3 \leq 3 mm$ (Formula 4) [Math. 5] $10 \leq L / D 3 \leq 30$ (Formula 5)

3. The rotary cutting tool according to claim 1 or 2, wherein the recess has a cross shape as viewed along the rotation axis.

4. The rotary cutting tool according to any one of claims 1 to 3, wherein
the cover is provided with a second attachment hole into which a screw that fixes the cover to the main body portion is inserted, and
the second attachment hole is located on an inner side with respect to the coolant accumulation groove in the radial direction.

5. The rotary cutting tool according to any one of claims 1 to 4, wherein
the cover is provided with a third attachment hole into which a screw that fixes the cover to the main body portion is inserted, and
the third attachment hole is located on the outer side with respect to the coolant accumulation groove in the radial direction.

6. The rotary cutting tool according to any one of claims 1 to 5, wherein
the coolant accumulation groove has an annular shape or an arc shape as viewed along the rotation axis.
